(19) **Europäisches Patentamt**

**European Patent Office**

**Office européen des brevets**

(11) Publication number: **0 225 752 B1**

(12) # EUROPEAN PATENT SPECIFICATION

(45) Date of publication of patent specification :
08.05.91 Bulletin 91/19

(51) Int. Cl.⁵ : **F16K 5/06, F16K 25/00**

(21) Application number : **86309023.9**

(22) Date of filing : **18.11.86**

(54) **Ball valve.**

(30) Priority : **21.11.85 US 800480**

(43) Date of publication of application :
**16.06.87 Bulletin 87/25**

(45) Publication of the grant of the patent :
**08.05.91 Bulletin 91/19**

(84) Designated Contracting States :
**AT BE CH DE ES FR GB IT LI LU NL SE**

(56) References cited :
**EP-A- 0 051 993**
**CH-A- 651 901**
**DE-A- 2 552 297**

(56) References cited :
**US-A- 4 023 773**
**US-A- 4 052 091**
**US-A- 4 272 057**
**US-A- 4 458 878**

(73) Proprietor : **Glynwed Tubes & Fittings Limited**
**Walsall Road Norton Canes**
**Cannock Staffordshire WS11 3NS (GB)**

(72) Inventor : **Haas II, Carroll J.**
**6215 Bravo Court, Apt. 2A**
**Kalamazoo Michigan 49002 (US)**

(74) Representative : **Lesley, Sheila F. et al**
**FORRESTER & BOEHMERT Widenmayer**
**Strasse 4/I**
**W-8000 München 22 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

THIS INVENTION relates to improvements in ball valves. More specifically, the invention relates to a ball valve structure in which at least one seal of the valve is releasably held in place by mounting the seal on a removable seal insert which is held in place in the valve body.

Ball valves are very well known in the art as effective means for controlling the flow of fluid. Such valves generally comprise a rotatable spherical ball located in a chamber within the valve body. A fluid passageway through the ball permits the flow of fluid through the valve when the ball is in an open position. Ideally, when the ball is in the closed position leakage of fluid through the valve is prevented. This requires the use of washers, gaskets, O-rings and other sealing arrangements which contact the ball and the interior wall of the valve body to provide a tight, substantially leak-proof fit of the ball when the valve is closed.

These sealing systems are subject to wear because of contact with the movable ball, damage from exposure to extremes of temperature and pressure, or contact with harmful chemicals passing through the valve. Therefore, periodic maintenance of the sealing systems must be performed.

It is known in the art to provide ball valve seals on opposite sides of the ball and adapted for sealingly contacting the ball in the open and closed positions thereof. One or both of the seals may be provided on a hollow cylindrical seal carrier which is removable from the valve body. It is necessary, in such constructions, to be able to assemble the valve with the ball already located inside the valve body and to be able to adjust the sealing pressure of the seals on the ball. In some constructions, the seal carrier is glued in place in the valve body, but such a construction is not readily adjustable. In other constructions, the seal carrier or a lock ring therefor, is screwed into the valve body. The screwed-in constructions cannot be adjusted when the valve union is in place. Also, the screwed-in constructions are not as safe as is desired. If the nut of the union is removed from the valve body while the ball valve is closed and is still under pressure, the pressure of the fluid presses the ball axially against the threads. This pressure can destroy the screw connection and cause the seal carrier and the ball to be blown out of the valve body, with possibly serious consequences. In another construction, the removable seal carrier is held in place against the ball and the interior wall of the valve body by means of a bayonet-type mount. A bayonet-type mounting system typically involves one or more pins or other projections extending radially from the seal carrier which are received in one or more grooves on the interior wall of the valve body when the carrier is rotated. Such a bayonet-type mount has various drawbacks which reduce its utility, namely : bayonet-type mounts can, at the most, provide a surface engagement area of only about 50% of the circumference of the valve body and bayonet-type mounts can cause mistakes in use because sometimes it is difficult to ascertain whether the pin-carrying seal carrier has been completely turned so as to be fully engaged and releasably locked in place.

US-A-4052091 discloses a ball valve in which the valve ball is mounted in a sleeve member which receives, at either end, pipe end segments for connection with pipework, which pipe end segments carry seals engaging the valve ball. Each pipe end segment is held in place in the sleeve member by a string of disc-like beads located in an annular channel defined in part by an annular groove in the interior of the sleeve member and in part by an opposing annular groove formed around the periphery of the pipe end segment. The string of disc-like beads is insertable and removable through an opening in the sleeve member connecting the annular chamber with the exterior.

U.S. Patent Specification No. 4272057 discloses a ball valve in which the valve ball is insertable into the valve housing through an opening in the top of the valve housing, the stem of the valve ball being rotatably mounted in a plug or hood which fits snugly within the opening in the valve body. The plug is held in place in the valve body by means of an elongate flexible retaining spring which is threaded around an annular passage defined in part by an annular groove on the periphery of the plug and an opposing annular groove around the opening which receives the plug, the retaining spring being extended chordally through an opening in the valve housing wall, to the exterior thereof. Similar retaining springs act as removable stops to hold the valve seals against the valve ball.

The constructions of US-A-4052091 and US-A-4272057, however, use retaining members of relatively complex and thus expensive form and furthermore require a relatively high degree of accuracy in forming the corresponding grooves in the valve housing.

U.S. Patent Specification No. 4458878 discloses a ball valve in which a valve ball is located in a passage in a valve body, the end portions of the passage being defined by the interiors of respective externally screw-threaded stubs which receive internally threaded nuts or unions securing annular end caps which in turn connect with the pipework in which the valve is fitted. Removable seal carriers are located in the respective end portions of the passage through the valve body, the seal carriers being normally held in positions in which their seals engage the valve ball, by said end caps engaged by said nuts. The seal carriers are additionally held captive in the valve body by retaining plates inserted radially through respective slots in the walls of said screw-threaded stubs into annular grooves around the seal carriers, a pair of such retaining plates, diametrally opposed, being used for each seal carrier. The retaining plates in turn are held in position by the nuts or unions which, when screwed onto the stubs on the valve body, extend over the slots holding the retaining plates.

The retaining plates hold the seal carriers captive when the screw-threaded nuts or unions are removed. However the individual retaining plates provide highly localised retaining forces acting on the seal carriers and require substantial manual dexterity in handling, insertion and removal.

It is an object of the invention to provide a ball valve having improved means for holding a seal in place against the ball of a ball valve.

According to the invention there is provided a ball valve for controlling the flow of fluid comprising : a valve body, a ball located within said body, a removable seal carrier located within a passage afforded by said valve body, said seal carrier having sealing means sealingly engaging said ball and sealing means sealingly engaging said valve body, said passage afforded by the valve body having an annular channel formed therearound and facing inwardly towards the seal carrier, said annular channel communicating with the exterior of the valve body by means of an aperture extending through the wall of the valve body, the seal carrier having an annular channel formed around its periphery, facing towards the wall of said passage and registering with said annular channel formed around said passage to define an annular chamber with said annular channel formed around said passage, a flexible elongate holding member passing through said aperture and extended circumferentially around the seal carrier within said annular chamber, so as to form a split ring encircling the seal carrier, and which split ring has its radially inner part engaged in the annular channel in the periphery of the seal carrier and its radially outer part engaged in the annular channel in the valve body around said passage, said holding member being removable from said annular chamber via said aperture to allow removal of the seal carrier from the valve body, characterised in that said holding member is a unitary, solid, flexible, resilient locking strip of synthetic plastics material.

It will be appreciated that, in a valve embodying the invention, it is possible to remove the union nut while the valve is under pressure with reduced risk that the ball will be blown out of the valve body. The locking strip solidly engages both the valve body and the seal carrier thereby holding the seal in position for sealing contact with the ball. The arrangement is such that the locking strip can be easily inserted or withdrawn from the annular channel via an opening or insertion slot leading to the annular channel.

The locking strip insures that almost 100% of the circumference of the internal wall of the valve body is releasably fixedly interconnected with the seal carrier, thereby providing a more secure seal than can be obtained using a screwed-in or bayonet-type mount. Unlike the bayonet-type mounts, in which sometimes it is difficult to ascertain whether the seal carrier is fully locked in place, the locking strip of the present invention will protrude from the opening or insertion slot if it is not in a fully installed position so that this condition will be readily observable. Furthermore, the locking strip can permit small adjustments of the position of seal carrier to be made from outside the valve so as to increase or decrease, as needed, the pressure of the seal against the ball. To provide for this external adjustability, the seal carrier may be mounted so that it can slide axially in the valve body to a limited extent. The union nut and the internal coupling part of the union are used to hold the seal carrier in place and to adjust the sealing pressure.

Embodiments of the invention are described below by way of example, with reference to the accompanying drawings, wherein :

FIGURE 1 is a side view of a ball valve embodying the present invention ;

FIGURE 2 is a partial cross-sectional view through the valve taken along line II-II of Figure 1 ;

FIGURE 3 is a cross-sectional view through the valve body taken along line III-III of Figure 2 ;

FIGURE 4 is a side view of the threaded portion of the valve showing the location of an installed locking strip and insertion slot.

FIGURE 5 is a fragmentary view of a modification.

The ball valve 10 comprises a generally cylindrical, hollow valve body 11 having threaded end portions 25 for threadably engaging screwed pipe unions 12 and 12A. The unions 12 and 12A are comprised of internally threaded, shouldered nuts 13 and 13A, the shoulders of which are engageable with the radially outwardly projecting flanges of the cylindrical, flanged coupling parts 14 and 14A.

The handle 15 is connected by any suitable conventional means with the ball 16, to rotate the ball through an angle of 90° in order to open or close the valve. The ball 16 is located within the ball valve cavity 24 of the valve body and has a passageway 23 which permits fluid to flow therethrough. The ball 16 may be capable of a small amount of axial movement with respect to the valve body when the valve is in a closed position.

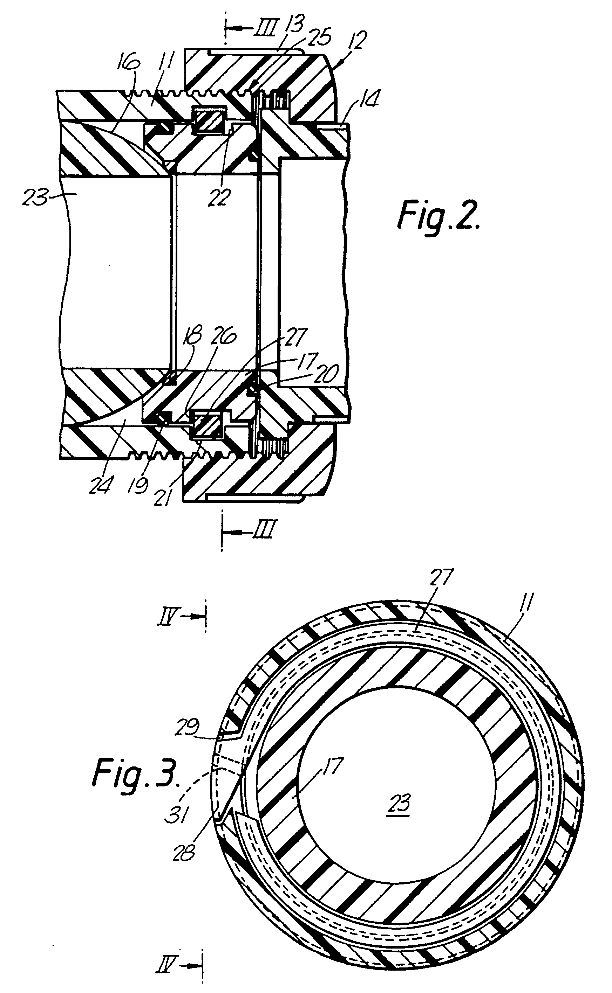

A hollow, generally cylindrical, seal carrier 17 is disposed inside one end of the valve body 11 adjacent to the ball 16. The seal carrier 17 carries an annular seal ring 18 made of a durable, relatively low friction, sealing material, such as Teflon, nylon or Delrin, which seal ring sealingly and slidingly engages the outer surface of the ball 16 to prevent flow of fluid into the cavity 24 when the parts are in the open position as shown in Figure 2 and when the ball is rotated through an angle of 90° to the closed position.

Additionally, an O-ring 19 made of rubber or other suitable material is provided between the seal carrier 17 and the internal wall of the valve body 11 to minimise fluid leakage therebetween. A second O-ring 20 is provided between the flange of the coupling part 14 and the opposing axially outer end of the seal carrier 17.

An annular groove 21 is formed in and extends circumferentially around the internal wall of the valve body 11. The seal carrier 17 has a recess 22 which is radially opposed to the groove 21 and has a radially outwardly projecting shoulder 26 at its axially inner end. A locking strip 27 is received in the groove 21 and the recess 22 to releasably lock the seal carrier 17 in place inside the valve body 11. The locking strip 27 is a radially split, annular ring of generally rectangular cross-section and it has a radially outwardly projecting locking pawl 28 at one free end of said strip. The seal carrier 17 is capable of being moved axially inwardly relative to locking strip 27 to adjust the sealing pressure between the seal 18 and ball 16 as described below. However, if the nut 13 is loosened while the ball valve is closed and the valve is still under pressure, the seal carrier 17 can shift axially outwardly only until its shoulder 26 engages the opposing portion of the locking strip 27. Thus, the seal carrier 17 is safely retained in place within the valve body.

As shown in Figure 3, access to the annular groove 21 within the valve body 11 is provided via an insertion slot 29 which opens radially through the valve body 11 between the opposite axial ends of the threaded end portion 25 (Figure 4). The locking strip 27 is made of a flexible, durable material, such as Delrin resin, polypropylene, PVDF or other suitable plastics. The parts are assembled by inserting the seal carrier 17 into the valve body 11 until the groove 21 and recess 22 are aligned. Then the locking strip 27 is introduced into the insertion slot 29 and is fed into and pushed through the annular groove 21 until the parts are in the position shown in Figure 3 wherein the locking pawl 28 is received in the slot 29.

A hole 31 is provided through the body of the pawl 28 of the locking strip 27 to facilitate mechanically engaging the locking strip 27 with a hook or other device to aid in removing the locking strip from the valve.

As shown in Figure 4, the insertion slot 29 is located between and spaced from the axial ends of the threaded portion 25 of the valve body 11. When the nut 13 of union 12 is screwed down over the threaded portion 25 it will cover the insertion channel 29 and the locking strip 27 thereby keeping the locking strip 27 securely in place.

As shown in Figures 2 and 4, the axially outer end of the seal carrier 17 projects a small distance outwardly beyond the axial end of the valve body 11. The flange of the coupling part 14 engages the axially outer end of the seal carrier 17 and the O-ring 20.

Thus, by rotating the nut 13 of the union 12 on the threaded portion of the valve body, the seal carrier 17 can be moved a small distance axially with respect to valve body 11 whereby to adjust the contact pressure between the ring 18 and the ball 16.

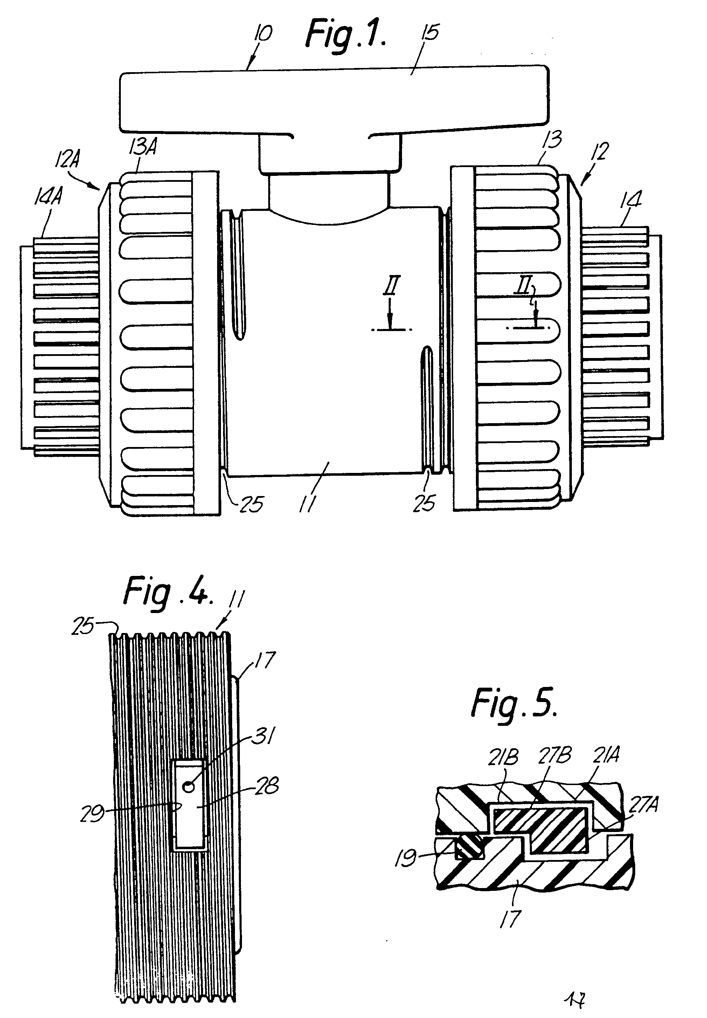

The opposite end (leftward end in Figure 1) of the valve body also contains a seal carrier including a seal ring, like seal ring 18, for engaging the opposite side of the ball 16. This seal carrier can, if desired be of the same structure as seal carrier 17 and its associated parts. It is not usually necessary, however, to provide two removable seal carriers at opposite ends of the valve body 11. Rather, the seal carrier provided in the leftward end of the valve body can be integral with and not removable from the valve body, if desired.

Figure 5 illuntrates a modification in which the groove 21A has an axially inwardly extending portion 21B which extends substantially up to the O-ring. The locking strip 27A has an integral extension 27B which extends into and substantially fills the portion 21B. Thin modified design in useful to minimise the possibility that axially outward movement of the seal carrier 17 can roll the locking strip 27 out of the groove 21.

The ball valves described with reference to the drawings are externally adjustable and are safer than the prior art constructions because the ball is prevented from being blown out of the valve body when the nut of the union is loosened.

## Claims

1. A ball valve (10) for controlling the flow of fluid comprising : a valve body (11), a ball (16) located within said body, a removable seal carrier (17) located within a passage (24) afforded by said valve body, said seal carrier having sealing means (18) sealingly engaging said ball and sealing means (19) sealingly engaging said valve body, said passage (24) afforded by the valve body having an annular channel (21) formed therearound and facing inwardly towards the seal carrier, said annular channel (21) communicating with the exterior of the valve body by means of an aperture (29) extending through the wall of the valve body, the seal carrier having an annular channel (22) formed around its periphery, facing towards the wall of said passage (24) and registering with said annular channel (21) formed around said passage to define an annular chamber with said annular channel (21) formed around said passage, a flexible elongate holding member (27) passing through said aperture (29) and extended circumferentially around the seal carrier within said annular chamber, so as to form a split ring encircling the seal carrier, and which split ring has its radially inner part engaged in the annular channel (22) in the periphery of the seal carrier (17) and its radially outer part engaged in the annular channel (21) in the valve body around said passage, said holding member (27) being removable from said annular chamber via said aperture (29) to allow removal of the seal carrier (17) from the valve body, characterised in that said holding member (27) is a unitary, solid, flexible, resilient locking strip of synthetic plastics material.

2. A ball valve according to claim 1 wherein said locking strip (27) has an enlarged end portion forming a locking pawl (28) which is received in said aperture (29) when the strip is fully inserted into said annular chamber.

3. A ball valve according to claim 1 or claim 2 wherein said valve body has externally threaded hollow cylindrical end portions, said passage receiving the seal carrier (17) being provided by the interior of one of said end portions, said opening (29) being disposed between the axial ends of the external screw threading on the respective end portion (25), a threaded pipe union (12) being screwed onto the respective end portion (25) and extending over said opening (29), thereby preventing withdrawal of said locking strip from the valve body.

4. A ball valve according to claim 2 wherein said locking pawl has a hole (31) formed therein to facilitate extraction of the locking strip with a hook or other tool.

5. A ball valve according to any preceding claim wherein said annular channels (21, 22) are of rectangular cross-section and said locking strip (27) is of complementary rectangular cross-section.


## Ansprüche

1. Kugelhahn (10) zum Steuern des Durchflusses einer Flüssigkeit, gekennzeichnet durch : einen Hahnkörper (11), eine in besagtem Körper angeordnete Kugel (16), einen entfernbaren Dichtungsträger (17), der in einem Durchgang (24) angeordnet ist, der von besagtem Hahnkörper bereitgestellt wird, wobei besagter Dichtungsträger Dichtmittel (18), die in dichtendem Eingriff mit besagter Kugel stehen, und Dichtmittel (19), die in dichtendem Eingriff mit besagtem Hahnkörper stehen, aufweist, besagter Durchgang (24), der vom Hahnkörper bereitgestellt wird, einen Ringkanal (21) aufweist, der um diesen herum ausgebildet und nach innen zu besagtem Dichtungsträger hin offen ist, besagter Ringkanal (21) mit der Außenseite des Hahnkörpers über eine Öffnung (29) in Verbindung steht, die sich durch die Wand des Hahnkörpers hindurch erstreckt, der Dichtungsträger einen um seinen Umfang herum ausgebildeten Ringkanal (22) aufweist, der zur Wand besagten Durchgangs (24) hin offen ist und sich mit besagtem Ringkanal (21) deckt, der um besagten Durchgang herum ausgebildet ist, so daß mit besagtem Ringkanal (21), der um besagten Durchgang herum ausgebildet ist, eine Ringkammer festgelegt ist, ein biegsames längliches Halteteil (27) durch besagte Öffnung (29) hindurchtritt und sich um den Umfang besagten Dichtungsträgers herum innerhalb besagter Ringkammer erstreckt, um einen Spaltring zu bilden, der den Dichtungsträger umschließt, und dieser Spaltring mit seinem radial nach innen gerichteten Teil mit dem Ringkanal (22) im Umfang des Dichtungsträgers (17) in Eingriff steht und sein radial nach außen gerichteter Teil mit dem Ringkanal (21) im Hahnkörper um besagten Durchgang herum in Eingriff steht, wobei besagtes Haltteil (27) aus besagter Ringkammer über besagte Öffnung (29) entfernbar ist, um die Entfernung des Dichtungsträgers (17) aus dem Hahnkörper zu ermöglichen, dadurch gekennzeichnet, daß besagtes Haltteil (27) ein einstückiger, fester, biegsamer, federnder Sicherungsstreifen aus synthetischem Kunststoffmaterial ist.

2. Kugelhahn nach Anspruch 1, dadurch gekennzeichnet, daß besagter Sicherungsstreifen (27) einen vergrößerten Endabschnitt aufweist, der eine Sicherungsklaue (28) bildet, die in besagter Öffnung (29) aufgenommen wird, wenn der Streifen vollständig in besagte Ringkammer eingeführt ist.

3. Kugelhahn nach Anspruch 1 oder Anspruch 2, dadurch gekennzeichnet, daß besagter Hahnkörper auf der Außenseite mit Schraubgewinde versehene, hohle, zylindrische Endabschnitte aufweist, wobei besagter Durchgang, der den Dichtungsträger (17) aufnimmt, vom Inneren eines der besagten Endabschnitte bereitgestellt wird, besagte Öffnung (29) zwischen den axialen Enden des äußeren Schraubgewindes auf dem entsprechenden Endabschnitt (25) angeordnet ist, ein mit Schraubgewinde versehenes Rohranschlußstück (12) auf den entsprechenden Endabschnitt (25) aufgeschraubt wird und sich über besagte Öffnung (29) erstreckt, wodurch das Herausziehen besagten Sicherungsstreifens aus dem Hahnkörper verhindert wird.

4. Kugelhahn nach Anspruch 2, dadurch gekennzeichnet, daß besagte Sicherungsklaue ein darin ausgebildetes Loch (31) aufweist, um das Herausziehen des Sicherungsstreifens mit einem Haken oder einem anderen Werkzeug zu erleichtern.

5. Kugelhahn nach einem vorangehenden Anspruch, dadurch gekennzeichnet, daß besagte Ringkanäle (21, 22) einen rechteckigen Querschnitt aufweisen und besagter Sicherungsstreifen (27) einen komplementären rechteckigen Querschnitt aufweist.


## Revendications

1. Vanne à boisseau (10) destinée à réguler le flux de fluide comprenant : un corps de vanne (11), un boisseau (16) situé à l'intérieur du corps, un support de joint d'étanchéité amovible (17) situé à l'intérieur d'un passage (24) pratiqué dans le corps de la vanne, ce support de joint présentant des moyens d'étanchéité (18) coopérant de façon étanche avec le boisseau et les moyens d'étanchéité (19) coopérant de façon étanche avec le corps de la vanne, le passage (24) pratiqué dans le corps de la vanne présentant un canal annulaire (21) formé autour de celui-ci et faisant face vers l'intérieur en direction du support de joint d'étanchéité, le canal annulaire (21) communiquant avec l'extérieur du corps de la vanne grâce à une ouverture (29) s'étendant à travers la paroi du corps de la vanne, le support de joint d'étanchéité présentant un canal annulaire (22) formé sur sa périphérie, en regard de la paroi du passage (24) et coïncidant avec le canal annulaire (21) formé autour de ce passage pour définir une chambre annulaire avec le canal annulaire (21) formé autour de ce passage, un élément de retenue allongé souple (27) traversant l'ouverture (29) et s'étendant circonférentiellement autour du support de joint d'étanchéité à l'intérieur de la chambre annulaire de façon à former une bague à fente entourant le support de joint d'étanchéité, laquelle bague à fente présente sa partie intérieure radialement engagée dans le canal annulaire (22) sur la périphérie du support de joint d'étanchéité (17) et sa partie extérieure radialement engagée dans le canal annulaire (21) dans le corps de la vanne autour du passage, l'élément de retenue (27) pouvant être enlevé de la chambre annulaire par l'ouverture (29) pour permettre l'extraction du support de joint d'étanchéité (17) du corps de la vanne, caractérisée en ce que l'élément de retenue (27) est une bande de blocage monobloc, intégrale, souple élastique en un matériau plastique synthétique.

2. Vanne à boisseau selon la revendication 1, dans laquelle la bande de blocage (27) présente une portion d'extrémité agrandie formant un cliquet de blocage (28) qui est logé dans l'ouverture (29) lorsque la bande est entièrement introduite dans la chambre annulaire.

3. Vanne à boisseau selon la revendication 1 ou la revendication 2, dans laquelle le corps de vanne présente des portions d'extrémité cylindriques creuses filetées extérieurement, le passage logeant le support de joint d'étanchéité (17) et étant prévu sur l'intérieur de l'une des portions d'extrémité, l'ouverture (29) étant disposée entre les extrémités axiales du filetage extérieur sur la portion d'extrémité respective (25), un raccord de conduite fileté (12) étant vissé sur la portion respective (25) et s'étendant sur l'ouverture (29), permettant ainsi de retirer la bande de blocage du corps de la vanne.

4. Vanne à boisseau selon la revendication 2, dans laquelle la bande de blocage comporte un trou (31) pratiqué dans celle-ci pour faciliter l'extraction de la bande de blocage avec un crochet ou un autre outil.

5. Vanne à boisseau selon l'une quelconque des revendications précédentes, dans laquelle les canaux annulaires (21, 22) sont de section transversale rectangulaire et la bande de blocage (27) est de section transversale rectangulaire complémentaire.

# Fig.1.

# Fig.4.

# Fig.5.

Fig.2.

Fig.3.